# EUROPEAN PATENT SPECIFICATION

(11) **EP 0 771 334 B1**
(45) Date of publication and mention of the grant of the patent: **18.10.2000**
(21) Application number: 95926931.7
(22) Date of filing: 11.07.1995
(51) Int. Cl.: C08G 59/34, C08G 59/22, C08L 63/08, C08L 63/00

(54) **EPOXIDIZED LOW VISCOSITY RUBBER TOUGHENING MODIFIERS FOR EPOXY RESINS**
EPOXYDIERTES NIEDRIGVISKOSES KAUTSCHUKMODIFIZIERUNGSMITTEL FÜR EPOXYHARZZUSAMMENSETZUNGEN
MODIFICATEURS EN CAOUTCHOUC EPOXYDIQUE DE FAIBLE VISCOSITE PERMETTANT D'AUGMENTER LA DURETE DE RESINES EPOXYDES

(30) Priority: 18.07.1994 US 277379
(43) Date of publication of application: 07.05.1997
(73) Proprietor: SHELL INTERNATIONALE RESEARCH MAATSCHAPPIJ B.V., 2596 HR Den Haag (NL)
(72) Inventor: ST. CLAIR, David, John, Houston, TX 77079 (US)
(86) International application number: PCT/EP95/02818
(87) International publication number: WO 96/02586

(56) References cited:
- EP-A- 0 415 749
- EP-A- 0 516 203
- EP-A- 0 540 467
- EP-A- 0 564 050
- WO-A-95/28431
- DE-A- 1 594 038
- GB-A- 1 002 320
- GB-A- 2 166 138
- US-A- 3 073 792

## Description

This invention concerns the use of epoxidized low viscosity polydiene polymers as toughening modifiers for blends of cycloaliphatic epoxy resins and optionally aromatic epoxy resins. More specifically, the invention relates to particular epoxidized low viscosity polydiene polymers.

Cured epoxy resins are typically strong, rigid, hard materials. Further, because of their chemical constitution they adhere strongly to many substrate materials. These physical characteristics of cured epoxy resins make them useful in a broad range of applications. One disadvantage of cured epoxy resins is their brittle character. When subjected to impact, cyclic stresses, thermal stresses, or differences in adhesive-substrate expansivities, epoxy resins tend to fail at relatively low applied stresses in a brittle manner. For example, cycloaliphatic epoxy resins are generally known to be useful in a wide range of products such as filament-wound composites, as encapsulants for electrical products and in adhesives and coatings (such resins include the Union Carbide Cycloaliphatic Epoxides and CYRACURE resins) but have the disadvantage that they are very brittle when cured. This brittleness makes them unsuitable for many applications in coatings where brittleness leads to poor adhesion, in structural adhesives where brittleness causes poor impact resistance and in electrical encapsulants where brittleness leads to poor thermal shock resistance. Thus, it is clear that it would be advantageous if a way could be found to impart a degree of flexibility to such epoxy resins while retaining most, if not all, of their advantageous characteristics.

The goal of much effort in this area has been to improve the toughness of, or in other words the energy required to fracture, epoxy resins. Improvements in this regard would lead to mechanically superior materials.

Therefore, it would be advantageous if an epoxy resin composition with increased toughness could be achieved. Importantly, the desired increase in toughness must occur with little or no sacrifice in the beneficial mechanical properties of epoxy resins such as strength, rigidity, hardness, and adhesion.

One route to this improvement is to incorporate a rubber into the epoxy matrix. Increases in toughness by incorporation of a rubber phase in an epoxy matrix are well known. Carboxy functional rubbers, as described in U.S. Patent Specification No. 3,823,107 entitled "Epoxy Resin Curing Agent Compositions, Their Preparation and Use," have been used as modifiers for epoxy resins. These carboxy functional modifiers suffer the disadvantage that they must be pre-reacted with the epoxy resin before cure so that the useful improvements in properties are achieved. Anhydride or acid functional graft copolymers, as described in U.S. Patent Specification No. 5,115,019 entitled "Carboxy-Functional Hydrogenated Block Copolymer Dispersed in Epoxy Resin," and U.S. Statutory Invention Registration No. H 1405, entitled "Epoxy Resin Composition," have been used as modifiers for epoxy resins. These rubbers also suffer the disadvantage that pre-reaction is required. Further, in some cases solvent blending and formation of emulsions of the polymeric modifier is required. The processes required to disperse these polymers possess the further disadvantage that the resulting dispersion of rubber in epoxy is sensitive to the process parameters such as temperature and shear rate during mixing, length of time of mixing, and type and amount of solvent so that inconsistent products are produced with varying properties.

Another disadvantage of epoxy resins is their propensity to absorb water leading to lowered glass transition temperatures and lessened mechanical properties. The objective of efforts in this area has been to reduce the amount of water absorbed by incorporating strongly hydrophobic materials into epoxy resins.

Low viscosity epoxidized polydiene polymers are known to be useful in adhesives. Such polymers are described in U.S. Patent Specification No. 5,229,464. These liquid epoxidized polymers have a relatively high degree of flexibility and respond to applied forces in a ductile manner. Compatible blends of the polymers of the above-described patent and epoxy resins are described in U.S. Patent Specification No. 5,332,783. The blends described in the afore-mentioned patent specification have the disadvantage that their compatibility with epoxy resins is limited. Their limited compatibility does not extend to a broad range of such epoxy resins and curing agents, and compatibilizing curing agents are required. They have the further disadvantage that even when marginally compatible, these polymers do not yield final cured epoxy resins having the desired improved toughness. Additionally, the compatibilizing curing agents give rise to cured epoxy resins of significantly reduced rigidity which are therefore of limited applicational use.

It has now been found that compositions containing polymers of generally a high epoxy content, a cycloaliphatic and optionally an aromatic epoxy resin and a hydroxy functional material yield cured products with improved and advantageous properties.

Accordingly, the present invention provides a toughened epoxy resin composition comprising:
(a) a curable cycloaliphatic epoxy resin and optionally a curable aromatic epoxy resin,
(b) an epoxidized low viscosity polydiene polymer, having an overall peak molecular weight as determined by GPC in the range from 1000 to 300,000,
(c) a curing agent, and
(d) a hydroxy functional material which is soluble in a blend of (a) and (b), and having a number average molecular weight of 75 to 300, selected from straight chain, or branched diols, triols, and polyols, or aromatic diols or triols and containing 6 or more carbon atoms.
wherein the epoxidized low viscosity polydiene polymer
(i) contains less than 5% by weight vinyl aromatic hydrocarbon and has an epoxy content of in the range of from 3.0 to 7.0 milliequivalents (meq) per gram of polymer
   or
(ii) contains in the range of from 5 to less than 20% by weight vinyl aromatic hydrocarbon and has an epoxy content of in the range of from 2.0 to 7.0 meq/g
   or
(iii) contains 20% by weight or more vinyl aromatic hydrocarbon and has an epoxy content of in the range of from 1.0 to 7.0 meq/g.

The low viscosity epoxidized polymers utilised in the present invention yield novel cured epoxy resin compositions having a superior balance of properties. The beneficial properties of the cured epoxy resin composition such as strength, rigidity, and hardness are maintained at high and useful levels while the toughness is simultaneously increased. Therefore, the compositions of the present invention present a broad utility. Additionally, the specified epoxidized polymers can be simply blended with epoxy resins before cure with no pre-reaction or solvent required. Furthermore, it is anticipated that the strongly hydrophobic character of the epoxidized polydiene polymers will reduce the amount of water absorbed by the rubber modified epoxy resin.

The invention composition includes a cycloaliphatic epoxy resin and optionally an aromatic epoxy resin.

Suitable aromatic epoxy resins include glycidyl ethers prepared by the reaction of epichlorohydrin with an aromatic compound containing at least one hydroxyl group carried out under alkaline reaction conditions, typically the reaction of epichlorohydrin with mono, di, and trihydroxyphenolic compounds. The epoxy resin products obtained when the hydroxyl group-containing compound is bisphenol-A are represented by the structure below wherein n is zero or a number greater than 0, commonly in the range of from 0 to 10, preferably in the range of from 0 to 2. 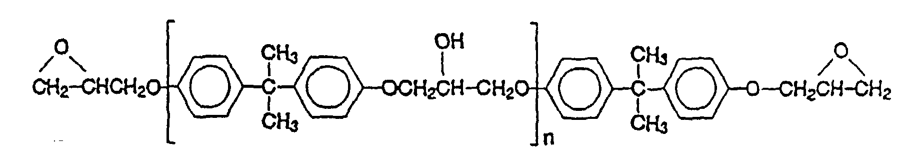 Other suitable epoxy resins can be prepared by the reaction of epichlorohydrin with mononuclear di- and tri-hydroxy phenolic compounds such as resorcinol and phloroglucinol, selected polynuclear polyhydroxy phenolic compounds such as bis(p-hydroxyphenyl)methane and 4,4'-dihydroxybiphenyl, or aliphatic polyols such as 1,4-butanediol and glycerol.

Aromatic epoxy resins suitable for the invention compositions have molecular weights generally the range of from 86 to 10,000, preferably 200 to 1500. The commercially-available epoxy resin EPON Resin 828 (EPON is a trademark), a reaction product of epichlorohydrin and 2,2-bis(4-hydroxyphenylpropane) (bisphenol-A) having a molecular weight of about 400, an epoxide equivalent (ASTM D-1652) of about 185-192, and an n value (from the formula above) of about 0.13, is presently the preferred aromatic epoxy resin because of its low viscosity, mechanical performance, and commercial availability. Other examples of aromatic epoxy resins are liquid resins such as EPON 825, a reaction product of epichlorohydrin and bisphenol-A with an n value of about 0.04, and EPON 826, a reaction product of epichlorohydrin and bisphenol-A with an n value of about 0.08, and solid resins such as EPON 1001, a reaction product of epichlorohydrin and bisphenol-A with an n value of about 2.3, EPON 1002, a reaction product of epichlorohydrin and bisphenol-A with an n value of about 3.4, and EPON 1031, a reaction product of epichlorohydrin and tetraphenylol ethane with an epoxide equivalent weight of about 220.

A cycloaliphatic epoxy resin component of the composition can be any curable cycloaliphatic resin having, on the average, more than one epoxide group per molecule and may bear substituents which do not materially interfere with the curing reaction.

Suitable cycloaliphatic epoxy resins include those made by oxidation of cyclic polyolefins with a peracid, typically peracetic acid. The major suppliers of suitable cycloaliphatic epoxy resins are Union Carbide and Ciba Geigy. The resins are marketed by Union Carbide as Cycloaliphatic Epoxides and, more recently, under the trade name CYRACURE. Typical structures for these resins are given in Union Carbide brochures "Cycloaliphatic Epoxide Systems", 9/87, and "CYRACURE Cycloaliphatic Epoxides, Cationic UV Cure", 4/92. A particularly preferred cycloaliphatic epoxy resin is Union Carbide's ERL-4221, also sold as CYRACURE UVR-6110 (3,4-epoxycyclohexylmethyl-3,4-epoxycyclohexane carboxylate). This is also the most widely used cycloaliphatic epoxy resin in the industry today. The epoxidized polydiene polymers of this invention have particularly good compatibility with CYRACURE UVR-6110, making them particularly good tougheners for this resin.

Other cycloaliphatic epoxy resins include those having glycidyl ether epoxide groups. Glycidyl ether epoxy resins are typically made by reaction of a diol or polyol with epichlorohydrin. A particularly preferred glycidyl ether epoxy resin is EPONEX 1510 ("EPONEX" is a trade mark) from Shell Chemical Company, made by reaction of hydrogenated bis-phenol A with epichlorohydrin. Other examples of aliphatic glycidyl ether epoxy resins are those made by reaction of epichlorohydrin with low molecular weight alcohols such as 1,4-butane diol and 1,6-hexane diol.

The hydroxy functional material is generally a relatively low molecular weight compound suitably having at least two hydroxyl groups which is soluble in the blend of the epoxy resins with the epoxidized polydiene polymer.

Preferably, the hydroxy functional material has a number average molecular weight of 100 to 150.

Preferably, it is present in an amount from 1 to 30 percent by weight of the total composition.

Suitable hydroxy functional materials are straight chain or branched diols, triols, and polyols such as 1,6 hexane diol and aromatic diols and triols and containing 6 or more carbon atoms. A particularly preferred hydroxy compound is 2-ethyl-1,3-hexane diol because it is a liquid and because of its high degree of compatibility with the blend of cycloaliphatic epoxy resins and the epoxidized polymers, its low viscosity,and its low volatility.

Monoepoxide resins can also be used at low levels as reactive diluents to reduce viscosity.

Polymers containing ethylenic unsaturation can be prepared by copolymerizing one or more olefins, particularly diolefins, by themselves or with one or more alkenyl aromatic hydrocarbon monomers. The copolymers may, of course, be random, tapered, block or a combination of these, as well as linear, star or radial.

The polymers containing ethylenic unsaturation or both aromatic and ethylenic unsaturation may be prepared using anionic initiators or polymerisation catalysts. Such polymers may be prepared using bulk, solution or emulsion techniques. When polymerised to high molecular weight, the polymer containing at least ethylenic unsaturation will, generally, be recovered as a solid such as a crumb, a powder, or a pellet. When polymerised to low molecular weight, it may be recovered as a liquid such as in the present invention. Polymers containing ethylenic unsaturation and polymers containing both aromatic and ethylenic unsaturation are available commercially from several suppliers.

In general, when solution anionic techniques are used, copolymers of conjugated diolefins and alkenyl aromatic hydrocarbons are prepared by contacting the monomer or monomers to be polymerised simultaneously or sequentially with an anionic polymerisation initiator such as group IA metals, their alkyls, amides, silanolates, napthalides, biphenyls or anthracenyl derivatives. It is preferred to use an organo alkali metal (such as sodium or potassium) compound in a suitable solvent at a temperature in the range of from -150°C to 300°C, preferably at a temperature in the range of from 0°C to 100°C. Particularly effective anionic polymerisation initiators are organo lithium compounds having the general formula:

RLiₙ

wherein R is an aliphatic, cycloaliphatic, aromatic or alkyl-substituted aromatic hydrocarbon radical having in the range of from 1 to 20 carbon atoms and n is an integer in the range of from 1 to 4.

Conjugated diolefins which may be polymerised anionically include those conjugated diolefins containing from 4 to 24 carbon atoms such as 1,3-butadiene, isoprene, piperylene, methylpentadiene, phenyl-butadiene, 3,4-dimethyl-1,3-hexadiene, and 4,5-diethyl-1,3-octadiene. Isoprene and butadiene are the preferred conjugated diene monomers for use in the present invention because of their low cost and ready availability. Alkenyl (vinyl) aromatic hydrocarbons which may be copolymerised include vinyl aryl compounds such as styrene, various alkyl-substituted styrenes, alkoxy-substituted styrenes, vinyl naphthalene, and alkyl-substituted vinyl naphthalenes.

The epoxidized low viscosity polymers suitably are of the general formula

(A-B-Aₚ)ₙ-Yᵣ-(A_{q}-B)ₘ (I)

wherein Y is a coupling agent or coupling monomers or initiator, and wherein A and B are polymer blocks which may be homopolymer blocks of conjugated diolefin monomers, copolymer blocks of conjugated diolefin monomers, or copolymer blocks of diolefin monomers and monoalkenyl aromatic hydrocarbon monomers. These low viscosity polymers may optionally contain up to 60% by weight or more of at least one vinyl aromatic hydrocarbon, preferably styrene. Polymers of this type are described in more detail in U.S.-A-5,229,464. Generally, it is preferred that the A blocks have a greater concentration of more highly substituted aliphatic double bonds than have the B blocks. Thus, the A blocks preferably have a greater concentration of di-, tri-, and tetra-substituted unsaturation sites (aliphatic double bonds) per unit of block mass than do the B blocks. This produces a polymer wherein the most facile epoxidation occurs in the exterior blocks - the A blocks (1,1-disubstituted, 1,2-disubstituted, 1,1,2-trisubstituted and 1,1,2,2-tetrasubstituted olefinic epoxides). The arms can also be B-A-B and B-A.

Suitably, in such polymers, the A blocks have a molecular weight in the range of from 100 to 6,000, preferably 100 to 3,000, and most preferably 500 to 2,000, and the B blocks have a molecular weight in the range of from 1000 to 15,000, preferably 2,000 to 10,000, and most preferably 3,000 to 7,000; n is greater than 0, r is 0 or 1, m is greater than or equal to 0, and n + m is in the range of from 1 to 100; p and q may be 0 or 1.

The polymer may contain hydroxyl functionality and may be hydrogenated. Preferably, the polymers have an overall molecular weight (peak, as determined by GPC) in the range of from 1000 to 100,000, and most preferably 1000 to 20,000, and preferably are liquids. Whilst the polymers may be homopolymers, e.g. polyisoprene, the polymers are suitably block copolymers of at least two conjugated dienes, preferably isoprene and butadiene, and optionally a vinyl aromatic hydrocarbon.

The ability to form suitably compatible blends with epoxy resins is one primary feature of the molecules of the present invention. While the preferred epoxidized polymers are largely unsaturated, analogous hydrogenated polymers may also be suitable. In polymers of high epoxy and styrene content it is anticipated that suitable compatibility with epoxy resins will result even when all the unsaturation is consumed by hydrogenation. These polymers offer the further advantages of improved chemical resistance and improved thermo-oxidative, oxygen, ozone and ultraviolet stability.

The polymers of the present invention thus accomplishes the objective of providing novel epoxidized low viscosity polydiene polymers which are highly compatible with aromatic and cycloaliphatic epoxy resins, much more so than the polymers described in the afore-mentioned U.S.-A-5,332,783 which were described there as having a preferred epoxy content of up to 3 milliequivalents of epoxy per gram of polymer. The low viscosity epoxidized polymers of the present invention yield novel cured epoxy resin compositions having a superior balance of properties. The beneficial properties of the cured epoxy resin composition such as strength, rigidity, and hardness are maintained at high and useful levels while the toughness is simultaneously increased. Therefore, the compositions of the present invention present a broad utility. Additionally, the epoxidized polymers of the present invention can be simply blended with epoxy resins before cure with no pre-reaction or solvent required.

Within the specified ranges of epoxy content and the above molecular weight ranges, these low viscosity polymers exhibit a high degree of compatibility for both aromatic and cycloaliphatic epoxy resins, which makes them very useful in "toughening" such resins so they can be better utilized in applications such as structural adhesives and coatings, especially primers. The low viscosity epoxidized polymers of the invention may be present in an amount in the range of from 1 to 50% by weight, preferably from 5 to 40 % by weight.

The most highly preferred low viscosity polymers for use herein are diblock polymers which fall within the scope of the general formula (I) above. The overall molecular weight of such diblocks is suitably in the range of from 1500 to 15000, preferably 3000 to 7000. Either of the blocks in the diblock may contain some randomly polymerised vinyl aromatic hydrocarbon as described above. For example, where I represents isoprene, B represents butadiene, S represents styrene, and a slash (/) represents a random copolymer block, the diblocks may have the following structures:
I-B; I-B/S; I/S-B; I-B/I; B/I-B/S; B-B/S;
or B_{mono-substituted}-B_{Di-substituted}
and all mirror images of the above. These diblocks are advantageous in that they exhibit lower viscosty and are easier to manufacture than the corresponding triblock polymers. Preferred triblock and star polymer forms however include I-B/S-I; I/S-B-I/S; I-S/B-I; and (I-B)₄.

The polymers of the invention may be prepared by conventional procedures such as those specified herein and in US-A-5229464.

Useful randomly epoxidized star polymers are described in US-A-5,247,026. That patent specification describes randomly epoxidized star polymers, based on at least one conjugated diolefin monomer, that contain di-, tri- and/or tetrasubstituted olefinic epoxides. The star polymers have greater than four arms or branches. Each arm has a molecular weight of from 1500 to 15,000 and contains a suitable concentration of di-, tri-, or tetrasubstituted olefinic epoxides (1,1-disubstituted, 1,2-disubstituted, 1,1,2-trisubstituted and 1,1,2,2-tetrasubstituted olefinic epoxides).

Polyisoprene homopolymers which have been epoxidized to the required extent may also be useful in toughening cycloaliphatic and optionally aromatic epoxy resins. Such polymers must be low viscosity and low molecular weight - the molecular weight should be in the range of from 500, for use with cycloaliphatic epoxy resins, or 1000 for use with aromatic resins, to 20,000. These polymers, as all for of the polymers described herein, may contain some amount of a vinyl aromatic hydrocarbon, preferably styrene, as described below.

When the concentration of alkenyl aromatic hydrocarbon monomer in the epoxidized polymer is less than 5% by weight, the concentration of epoxide is in the range from 3 to 7 meq/g of polymer. When the concentration of alkenyl aromatic hydrocarbon monomer is in the range of from 5% up to 20% by weight, the concentration of epoxide is in the range from 2 to 7 meq/g of polymer. When the concentration of monoalkenyl aromatic hydrocarbon is in the range of from 20% or more e.g. up to 60% by weight, the concentration of epoxide is in the range of from 1 to 7 meq/g of polymer. If the epoxy levels are any lower, the components are not sufficiently compatible to toughen aromatic epoxy resins. Also, at lower levels, the mixing temperature required to mix, adequately, polymer and epoxy resin will have to be undesirably high. At higher epoxy levels, the polymers will be too compatible with and too soluble in the epoxy resin to achieve the desired phase separation upon curing. It will also raise the viscosity and the cost without any corresponding benefit.

The preferred epoxy levels are 3.5 to 6 meq/g for less than 5% vinyl aromatic hydrocarbon, 3 to 6 for 5 to 20%, and 1.5 to 6 for 20 to 60%. If the epoxy levels are lower, then cloud points of 85° C or lower for blends with aromatic epoxy resins cannot be achieved without additional formulating ingredients. This is an indication of a uniform, compatible blend with uniform appearance and feel. Higher epoxy levels are not preferred for the same reason and also that they increase the viscosity and cost without any appreciable benefit.

It has been found that by the proper combination of unsaturation, epoxide level, and alkenyl aromatic monomer content, a low viscosity polydiene which possesses suitable compatibility with aromatic epoxy resins to yield an improved balance of properties can be made. The presence of epoxidation and unsaturation is required in the low viscosity polymers of this invention. The diene monomers remain unsaturated before epoxidation in the preferred polymers. When alkenyl aromatic monomers are present in aromatic epoxy resin compositions at concentrations of less than 5% by weight, the most preferred epoxide level is in the range of from 4.5 to 5.5 meq/g of polymer. When alkenyl aromatic monomers are incorporated at levels of 5% up to 20% by weight in the largely unsaturated polydiene block copolymer, its compatibility with epoxy resin is improved to such a degree that lower levels of epoxidation will yield improved rubber modified epoxy resins, and the most preferred range is from 4 to 5.5. When alkenyl aromatic monomers are present at concentrations of 20% or more, e.g. 20 to 60% by weight, the most preferred epoxide level is in the range of from 2 to 4.5 meq/g of polymer. These ranges are believed to be optimum because they allow aromatic epoxy resin blends to be made with a cloud point of no more than about 70°C (low end of range) and as low as 40 to 50°C (high end of range). It is believed that such compositions have the proper phase separation to achieve compositions with the best combination of properties, appearance, and feel.

Blends of aromatic epoxy resins with the higher epoxy content polymers of the present invention are physically different than blends of epoxy polymers with the lower epoxy content epoxidized polymers of US-A-5,229,464 and US-A-5,332,783. The blends of the present invention are stronger and more rigid. The uses for the blends of the present invention are ones which require a modified epoxy composition with better toughness and strength than the blends of US-A-5,332,783. It appears that the improved compatibility of the polymers of the present invention results in a modified epoxy resin in which there is better dispersion of the rubber phase in the epoxy matrix through better interfacial bonding. This improved compatibility is due to the presence of greater amounts of epoxy and,in some polymers, the presence of significant amounts of vinyl aromatic hydrocarbon.

The epoxidized rubber modified aromatic epoxy resins can be cured by a variety of means. Suitable epoxy curing agents include anionic initiators, cationic initiators, carboxy functionalized polyesters, polyamides, amido amines, polyamines, melamine-formaldehydes, phenol-formaldehydes, urea-formaldehydes, dicyandiamide, polyphenols, polysulfides, ketimines, novolacs, anhydrides, blocked isocyanates, anhydrides, and imidazoles. The composition will generally contain in the range of from 1 to 60, preferably 30 to 60, weight percent curing agent based on the epoxy resin composition.

The cured blends of the present invention may be used in structural adhesive compositions and coatings. The blends of the present invention have a higher toughness when used in a structural adhesive than structural adhesives using aromatic epoxy resins alone. Other applications for these compositions include electrical castings, encapsulants, potting compounds, laminates and construction adhesives.

Various types of fillers can be included in an aromatic epoxy resin composition, and a wide variety of fillers can be used. Suitable fillers include calcium carbonate, clays, talcs, zinc oxide, titanium dioxide, silica, iron oxide, mica, alumina, and antimony trioxide. The amount of filler usually is in the range of from 0 to 80% by weight of the formulation depending on the type of filler used and the application for which the formulation is intended. Preferred fillers are silica and titanium dioxide.

Other thermosettable resins that may optionally be included in the composition include for example, polyurethane, polyureas, polyamides, brominated epoxies, phenoxy resins, polyesters, polyester-polyether copolymers, bismaleimides, polyimides, and mixtures and copolymers thereof.

The invention composition may also include other additives, such as extenders, plasticizers, pigments, reinforcing agents, flow control agents and flame retardants.

As for aromatic epoxy resins, when cured cycloaliphatic epoxy resin matrices are also typically very brittle and one way to reduce the brittleness is to incorporate a relatively low modulus second phase in the cycloaliphatic epoxy resin matrix. Another way to reduce the brittleness is to incorporate a flexible additive (diluent) molecularly into the covalent resin network. This second approach will reduce brittleness but will also reduce the rigidity of the matrix more than the first approach.

The exact method by which the epoxidized polydiene polymers toughen cycloaliphatic epoxy resins is not known. However, the composition of the epoxidized polydiene polymer will probably determine the mechanism. Polymers based on isoprene and butadiene epoxidized to only about 3 meq/gm have marginal compatibility in cycloaliphatic epoxy resin and so, when cured, they probably toughen by the first approach. When epoxidized at about 6 meq/gm, they become soluble in the cycloaliphatic epoxy resin and so, when cured, they probably toughen by the second approach. When styrene is incorporated into the polymers, the level of epoxidation necessary to obtain at least marginal compatibility drops to about 2 meq/gm. At this level, the epoxidized polymers probably toughen by the first approach. When epoxidized to up to about 5 meq/gm, they become soluble in the cycloaliphatic epoxy resin and probably toughen by the second approach.

The epoxidized rubber modified cycloaliphatic epoxy resins can be cured by a variety of means. Anhydride curing agents are commonly used.

Another common method to cure cycloaliphatic epoxide groups is via a catalytic, ring-opening, homopolymerisation to generate ether linkages between molecules. Typical catalysts are Lewis acids, such as boron triflouride, and protic acids, including phosphoric acid and sulfonic acids such as trifluoromethanesulfonic acid. These acids will cure cycloaliphatic epoxy resins very quickly at ambient temperatures. Amine blocked versions of these acids are also useful. Therefore, the resin and catalyst must be used as a two-component product in which the two components are mixed immediately before application and must be applied before the mixture gels. These acids are also available in the salt form using volatile bases to block the epoxy curing reaction. These blocked catalysts can be mixed with the epoxy resin, since no reaction occurs at ambient temperatures, giving a one-component product.

The blends of the present invention may be used in any of the applications in which cycloaliphatic epoxy resins are presently used. The blends of the present invention should be more flexible, have higher toughness and have better thermal shock resistance when used in a structural adhesive, coating, composite or encapsulant than products using cycloaliphatic epoxy resins alone.

Stabilizers known in the art may also be incorporated into the composition. These may be for protection during the life of the article against, for example, oxygen, ozone and ultra-violet radiation. These may also be for stabilization against thermo-oxidative degradation during elevated temperature processing. Antioxidants which interfere with the curing reaction should be avoided.

Molecular weights of linear polymers or unassembled linear segments of polymers such as mono-, di-, triblock polymers, arms of star polymers before coupling, etc. are conveniently measured by Gel Permeation Chromatography (GPC), where the GPC system has been appropriately calibrated. For polymers of the type described herein, the appropriate standard is a narrow molecular weight distribution polystyrene standard. For anionically polymerised linear polymers, the polymer is essentially monodisperse and it is both convenient and adequately descriptive to report the "peak" molecular weight of the narrow molecular weight distribution observed. The peak molecular weight is usually the molecular weight of the main species shown on the chromatograph. For materials to be used in the columns of the GPC, styrene-divinyl benzene gels or silica gels are commonly used and are excellent materials. Tetrahydrofuran is an excellent solvent for polymers of the type described herein. Ultraviolet or refractive index detectors may be used.

Measurement of the true molecular weight of a coupled star polymer is not as straightforward or as easy to make using GPC. This is because the star shaped molecules do not separate and elute through the packed GPC columns in the same manner as do the linear polymers used for the calibration. Hence, the time of arrival at an ultraviolet or refractive index detector is not a good indicator of the molecular weight. A good method to use for a star polymer is to measure the weight average molecular weight by light scattering techniques. The sample is dissolved in a suitable solvent at a concentration less than 1.0 gram of sample per 100 millilitres of solvent and filtered using a syringe and porous membrane filters of less than 0.5 microns pore size directly into the light scattering cell. The light scattering measurements are performed as a function of scattering angle, polymer concentration and polymer size using standard procedures. The differential refractive index (DRI) of the sample is measured at the same wavelength and in the same solvent used for the light scattering. The following references give further details:
1. Modern Size-Exclusion Liquid Chromatography, M. W. Yau, J. J. Kirkland, D. D. Bly, John Wiley and Sons, New York, New York, 1979.
2. Light Scattering From Polymer Solutions, M. B. Huglin, ed., Academic Press, New York, New York, 1972.
3. W. K. Kai and A. J. Havlik, Applied Optics, 12, 541 (1973).
4. M. L. McConnell, American Laboratory, 63, May, 1978.

If desired, these block copolymers can be partially hydrogenated. Hydrogenation may be effected selectively as disclosed in U.S. Patent Reissue Specification No. 27,145. The hydrogenation of these polymers and copolymers may be carried out by a variety of well established processes including hydrogenation in the presence of such catalysts as Raney Nickel, nobel metals such as platinum and the like, soluble transition metal catalysts and titanium catalysts as in U.S. Patent Specification No. 5,039,755. The polymers may have different diene blocks and these diene blocks may be selectively hydrogenated as described in US-A-5,229,464.

### EXAMPLES

One important application of these epoxidized-rubber modified cycloaliphatic epoxy resin composition is in coatings, especially coatings crosslinked via a UV initiated cationic cure reaction. The formulations used for the following experiments are shown in the Table below. The cycloaliphatic epoxy resin was CYRACURE UVR-6110, 3,4-epoxycyclohexyl-methyl-3,4-epoxycyclohexane carboxylate, from Union Carbide. The epoxidized rubber was a diblock copolymer of isoprene and butadiene having block molecular weights of 820 and 4700, respectively, and was epoxidized to a level of 4.5 meq of epoxy per gram of polymer. The cationic photoinitiator was CYRACURE UVI-6974, mixed triarylsulfonium hexafluoroantimonate salts, also from Union Carbide. A wetting agent, FLUORAD FC-430, a nonionic fluorochemical surfactant from 3M, was used to reduce the surface tension of the coating and improve its ability to wet the aluminium substrate onto which the compositions were coated. The aromatic epoxy resin was EPON 828 resin (EPON is a Trade Mark). The hydroxy functional material was PEP-DIOL, 2-ethyl-1,3-hexane diol purchased from Aldrich.

The films were evaluated for mechanical properties. The appearance of the coatings was judged visually. The pencil hardness (gouge) of the coatings was measured according to the ASTM D3363 method of pushing successively softer pencil leads across the coating until the pencil lead will no longer gouge through the coating. The hardness scale (softest to hardest) is 6B<5B<4B<3B<2B<B<HB<F<H<2H<3H<4H<5H<6H. The methyl ethyl ketone (MEK) resistance of the coatings was measured according to the ASTM D4752 method of rubbing an MEK-moistened cloth across the coating for 200 cycles, or until breakthrough to the aluminium substrate occurred (one cycle equals one forward and one backward stroke). Since all the coatings survived 200 cycles without breakthrough, they were given a letter rating describing the appearance of the area rubbed with MEK for 200 cycles. A means no change, B means slight loss of gloss, and C means significant loss of gloss. Adhesion of the coatings was measured with the cross hatch adhesion test, ASTM D3359, Method B. In this test, a lattice pattern is scribed through the coating, pressure sensitive tape is applied and removed, and the amount of coating removed with the tape is rated. The scale ranges from 5 (no adhesion loss) to 0 (more than 65% adhesion loss). The flexibility of the coatings was measured with the mandrel bend test according to ASTM D522, Method A. In this test, the coated 10 cm (4-inch) wide, 0.6 mm (25 mil) thick panel is bent around a standard conical mandrel and the percentage of the distance across the panel through which the coating cracks is measured (0% is no cracking, 100% is cracking of the coating completely across the panel).

### Example 1

A masterbatch of the photoinitiator, CYRACURE UVI-6974, and fluorocarbon surfactant, FLUORAD FC-430(3M), was prepared in UVR-6110 for use in the blends. All blends were mixed manually at 100°C. They were cooled to 60°C and coated onto aluminium substrates (A412 Q-panels) with a #22 wire rod. The coated panels were irradiated at 3 metres per minute (10 feet per minute) with 1 medium pressure mercury lamp and post baked 10 minutes at 121°C. The viscosities of the mixtures were measured at 25°C using a Bohlin VOR Rheometer with concentric cylinder C114. Viscosity valves in the table are a 36 sec⁻¹ shear rate.

The viscosities of the blends and properties of the cured coatings are given in the Table. Qualitative inspection showed that all 12 of the coatings were hard, clear, mar resistant coatings having high gloss and excellent surface appearance. Formulations 1, 2, and 3 show the effect of the epoxidized polymer on coatings based on UVR-6110. The results of the MEK rub test show that all three coatings are well cured. However, all three have poor adhesion and fail the mandrel bend test. Formulations 4, 5, and 6 also show the effect of the epoxidized polymer on coatings containing 10 percent weight EPON RESIN 828. Again, all three coatings are well cured but all have poor adhesion and fail the mandrel bend test.

Formulations 7 through 12 are the same as formulations 1 through 6 except they also contain 10 percent weight of the small diol, 2-ethyl-1,3-hexane diol (PEP-DIOL). In 4 of the 6 formulations, addition of 10 percent weight PEP-DIOL improved adhesion. The R value (R = #epoxides/#hydroxyls) in this work is 4.5.

Formulations 7 through 12 allow assessment of the effectiveness of the epoxidized polymer as a toughener. Formulations 7 and 10 have good adhesion but fail the mandrel bend test. Addition of 10 to 20 percent weight epoxidized polymer to these formulations generally seems to reduce crosshatch adhesion. However, the epoxidized polymer toughens the coatings so they will pass the mandrel bend test. In fact, formulation 12, toughened with 20 percent weight epoxidized polymer, gives excellent performance in all of the test categories used in this work.

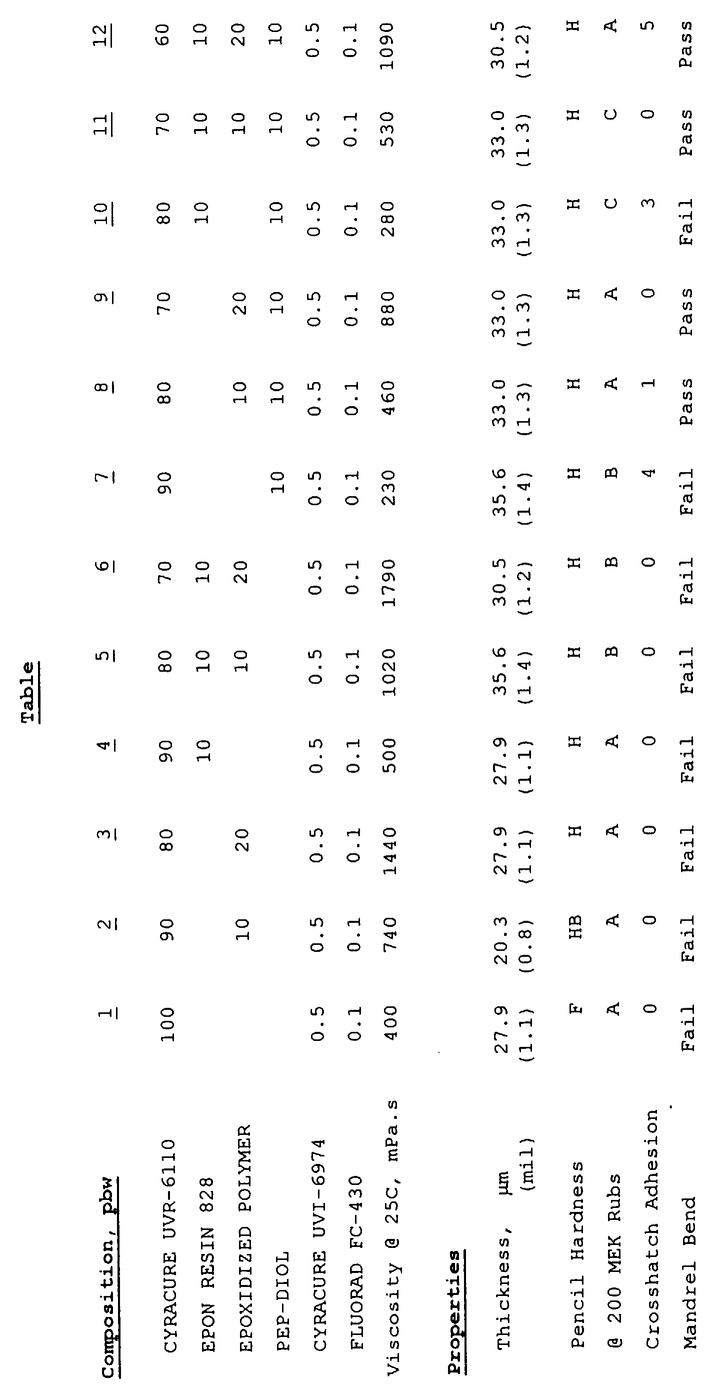

## Claims

1. A toughened epoxy resin composition comprising:
(a) a curable cycloaliphatic and optionally a curable aromatic epoxy resin,
(b) an epoxidized low viscosity polydiene polymer, having an overall peak molecular weight as determined by GPC in the range from 1000 to 300,000,
(c) a curing agent, and
(d) a hydroxy functional material which is soluble in a blend of (a) and (b), and having a number average molecular weight of 75 to 300, selected from straight chain or branched diols, triols, and polyols or aromatic diols or triols, and containing 6 or more carbon atoms.
wherein the epoxidized low viscosity polydiene polymer
(i) contains less than 5% by weight vinyl aromatic hydrocarbon and has an epoxy content of in the range of from 3.0 to 7.0 milliequivalents (meq) per gram of polymer
or
(ii) contains in the range of from 5 to less than 20% by weight vinyl aromatic hydrocarbon and has an epoxy content of in the range of from 2.0 to 7.0 meq/g
or
(iii) contains 20% by weight or more vinyl aromatic hydrocarbon and has an epoxy content of in the range of from 1.0 to 7.0 meq/g.

2. The composition according to claim 1 wherein the epoxidized low viscosity polydiene polymer has the structural formula
(A-B-Aₚ)ₙ-Yᵣ-(A_{q}-B)ₘ
wherein Y is a coupling agent or coupling monomers or initiator, and wherein A and B are polymer blocks which may be homopolymer blocks of conjugated diolefin monomers or copolymer blocks of conjugated diolefin monomers, the A blocks have a molecular weight of from 100 to 6,000 and the B blocks have a molecular weight of from 1000 to 15,000, n is greater than 0, r is 0 or 1, m is greater than or equal to 0, n + m ranges from 1 to 100, and p and q are 0 or 1.

3. The composition of claim 2 wherein the conjugated diolefin in the A block is isoprene and the conjugated diolefin in the B block is butadiene.

4. The composition of claim 2 wherein in the conjugated diolefin in the A block is 1,4-butadiene and the conjugated diolefin in the B block is 1,2-butadiene.

5. The composition according to any one of claims 1-4 comprising 30 to 90 percent by weight of the curable cycloaliphatic epoxy resin.

6. The composition according to only one of claims 1-5 comprising 5 to 40 percent by weight of the epoxidized low viscosity polydiene polymer.

7. The composition according to any one of claims 1-6 comprising 3 to 30 percent by weight of the aromatic epoxy resin.

8. The composition according to any one of claims 1-7 comprising 1 to 30 percent by weight of the hydroxy functional material.

9. The composition according to any one of claims 1-8 wherein the epoxidized low viscosity polydiene polymer contains from 5 to 50 percent by weight of a vinyl aromatic hydrocarbon.

10. The composition according to any one of claims 1-9 wherein the epoxidized low viscosity polydiene polymer contains from 3.5 to 5.0 milliequivalents of epoxy per gram of polymer.

11. A coating composition comprising the composition as claimed in any one of claims 1-10.

12. An adhesive composition comprising the composition as claimed in any one of claims 1-10.

## Patentansprüche

1. Zähgemachte Epoxyharzzusammensetzung, umfassend:
(a) ein härtbares cycloaliphatisches Epoxyharz und gegebenenfalls ein härtbares aromatisches Epoxyharz,
(b) ein epoxidiertes niedrigviskoses Polydienpolymer mit einem Gesamt-Peak-Molekulargewicht, bestimmt durch GPC, im Bereich von 1.000 bis 300.000,
(c) ein Härtungsmittel und
(d) ein hydroxyfunktionelles Material, das in einer Mischung aus (a) und (b) löslich ist und ein zahlenmittleres Molekulargewicht von 75 bis 300 aufweist, ausgewählt unter geradkettigen oder verzweigten Diolen, Triolen und Polyolen oder aromatischen Diolen oder Triolen und mit 6 oder mehr Kohlenstoffatomen, worin das epoxidierte niedrigviskose Polydienpolymer
(i) weniger als 5 Gew.-% vinylaromatischen Kohlenwasserstoff enthält und einen Epoxygehalt im Bereich von 3,0 bis 7,0 Milliäquivalenten (mÄq) pro Gramm Polymer aufweist oder
(ii) von 5 bis weniger als 20 Gew.-% vinylaromatischen Kohlenwasserstoff enthält und einen Epoxygehalt im Bereich von 2,0 bis 7,0 mÄq/g aufweist oder
(iii) 20 Gew.-% oder mehr vinylaromatischen Kohlenwasserstoff enthält und einen Epoxygehalt im Bereich von 1,0 bis 7,0 mÄq/g aufweist.

2. Zusammensetzung nach Anspruch 1, worin das epoxidierte niedrigviskose Polydienpolymer die Strukturformel
(A-B-Aₚ)ₙ-Yᵣ-(A_{q}-B)ₘ
aufweist, worin A für ein Kupplungsmittel oder Kupplungsmonomere oder Initiator steht und worin A und B Polymerblöcke bedeuten, bei denen es sich um Homopolymerblöcke aus konjugierten Diolefinmonomeren oder um Copolymerblöcke aus konjugierten Diolefinmonomeren handeln kann, wobei die Blöcke A ein Molekulargewicht von 100 bis 6.000 und die Blöcke B ein Molekulargewicht von 1.000 bis 15.000 haben, n größer als 0 ist, r den Wert 0 oder 1 hat, m größer als oder gleich 0 ist, n + m im Bereich von 1 bis 100 liegt und p und q 0 oder 1 bedeuten.

3. Zusammensetzung nach Anspruch 2, worin das konjugierte Diolefin in dem Block A Isopren ist und das konjugierte Diolefin in dem Block B Butadien ist.

4. Zusammensetzung nach Anspruch 2, worin das konjugierte Diolefin in dem Block A 1,4-Butadien ist und das konjugierte Diolefin in dem Block B 1,2-Butadien ist.

5. Zusammensetzung nach einem der Anprüche 1 bis 4, umfassend 30 bis 90 Gew.-% an dem härtbaren cycloaliphatischen Epoxyharz.

6. Zusammensetzung nach nur einem der Ansprüche 1 bis 5, umfassend 5 bis 40 Gew.-% an dem epoxidierten niedrigviskosen Polydienpolymer.

7. Zusammensetzung nach einem der Ansprüche 1 bis 6, umfassend 3 bis 30 Gew.-% an dem aromatischen Epoxyharz.

8. Zusammensetzung nach einem der Ansprüche 1 bis 7, umfassend 1 bis 30 Gew.-% an dem hydroxyfunktionellen Material.

9. Zusammensetzung nach einem der Ansprüche 1 bis 8, worin das epoxidierte niedrigviskose Polydienpolymer 5 bis 50 Gew.-% eines vinylaromatischen Kohlenwasserstoffes enthält.

10. Zusammensetzung nach einem der Ansprüche 1 bis 9, worin das epoxidierte niedrigviskose Polydienpolymer 3,5 bis 5,0 Milliäquivalente Epoxy je Gramm Polymer enthält.

11. Überzugszusammensetzung, umfassend die Zusammensetzung nach einem der Ansprüche 1 bis 10.

12. Klebstoffzusammensetzung, umfassend die Zusammensetzung nach einem der Ansprüche 1 bis 10.

## Revendications

1. Composition de résine époxy rendue tenace comprenant :
(a) une résine époxy cycloaliphatique durcissable et éventuellement une résine époxy aromatique durcissable,
(b) un polymère de polydiène de faible viscosité époxydé, ayant un poids moléculaire de pic global tel que déterminé par GPC allant de 1.000 à 300.000,
(c) un agent de durcissement, et
(d) une matière hydroxy fonctionnelle qui est soluble dans un mélange de (a) et (b), et ayant un poids moléculaire moyen numérique de 75 à 300, choisie parmi les diols, triols et polyols à chaîne droite ou ramifiée, ou parmi les diols et triols aromatiques, et contenant 6 atomes de carbone ou plus,
dans laquelle le polymère de polydiène de faible viscosité époxydé
(i) contient moins de 5 % en poids d'hydrocarbure vinyl aromatique et a une teneur en époxy allant de 3,0 à 7,0 milliéquivalents (méq) par gramme de polymère ou
(ii) contient de 5 à moins de 20 % en poids d'hydrocarbure vinyl aromatique et a une teneur en époxy allant de 2,0 à 7,0 méq/g ou
(iii) contient 20 % en poids ou plus d'hydrocarbure vinyl aromatique et a une teneur en époxy allant de 1,0 à 7,0 méq/g.

2. Composition suivant la revendication 1, dans laquelle le polymère de polydiène de faible viscosité époxydé a la formule structurale :
(A-B-Aₚ)ₙ-Yᵣ-(A_{q}-B)ₘ
dans laquelle Y représente un agent de couplage ou des monomères de couplage ou un initiateur, et dans laquelle A et B sont des blocs de polymère qui peuvent être des blocs d'homopolymère de monomères dioléfiniques conjugués ou des blocs de copolymère de monomères dioléfiniques conjugués, les blocs A ont un poids moléculaire de 100 à 6.000 et les blocs B ont un poids moléculaire de 1.000 à 15.000, n est supérieur à 0, r est égal à 0 ou 1, m est supérieur ou égal à 0, n+m vaut de 1 à 100 et p et q sont égaux à 0 ou 1.

3. Composition suivant la revendication 2, dans laquelle la dioléfine conjuguée dans le bloc A est de l'isoprène et la dioléfine conjuguée dans le bloc B est du butadiène.

4. Composition suivant la revendication 2, dans laquelle la dioléfine conjuguée dans le bloc A est du 1,4-butadiène et la dioléfine conjuguée dans le bloc B est du 1,2-butadiène.

5. Composition suivant l'une quelconque des revendications 1 à 4, comprenant 30 à 90 % en poids de la résine époxy cycloaliphatique durcissable.

6. Composition suivant l'une quelconque des revendications 1 à 5, comprenant 5 à 40 % en poids du polymère de polydiène de faible viscosité époxydé.

7. Composition suivant l'une quelconque des revendications 1 à 6, comprenant 3 à 30 % en poids de la résine époxy aromatique.

8. Composition suivant l'une quelconque des revendications 1 à 7, comprenant 1 à 30 % en poids de la matière hydroxy fonctionnelle.

9. Composition suivant l'une quelconque des revendications 1 à 8, dans laquelle le polymère de polydiène de faible viscosité époxydé contient de 5 à 50 % en poids d'un hydrocarbure vinyl aromatique.

10. Composition suivant l'une quelconque des revendications 1 à 9, dans laquelle le polymère de polydiène de faible viscosité époxydé contient de 3,5 à 5,0 milliéquivalents d'époxy par gramme de polymère.

11. Composition de revêtement comprenant la composition suivant l'une quelconque des revendications 1 à 10.

12. Composition d'adhésif comprenant la composition suivant l'une quelconque des revendications 1 à 10.
